# FASCICULE DE BREVET EUROPEEN

(11) **EP 3 935 935 B1**
(45) Date de publication et mention de la délivrance du brevet: **06.09.2023**
(21) Numéro de dépôt: 21183694.5
(22) Date de dépôt: 05.07.2021
(51) Int. Cl.: A01D 46/26

(54) **VIBREUR ÉLECTROPORTATIF POUR LA RÉCOLTE DE FRUITS**
TRAGBARER ELEKTROBETRIEBENER RÜTTLER FÜR DIE OBSTERNTE
PORTABLE ELECTRIC VIBRATING MACHINE FOR HARVESTING FRUIT

(30) Priorité: 09.07.2020 FR 2007277
(43) Date de publication de la demande: 12.01.2022
(73) Titulaire: Innovation Fabrication Commercialisation Infaco, 81140 Cahuzac-sur-Vère (FR)
(72) Inventeur: CHAMAYOU, Brice, 81310 PEYROLE (FR); GOUT, Christophe, 81150 CASTELNAU-DE-LÉVIS (FR)
(74) Mandataire: IPAZ

(56) Documents cités:
- EP-A1- 1 116 432
- EP-A1- 1 943 895
- EP-A1- 2 384 614
- WO-A2-2007/129207

## Description

La présente invention concerne un vibreur électroportatif pour la récolte de fruits, en particulier de fruits de petite taille.

Le domaine de l'invention est le domaine des outils électroportatifs pour la récolte de fruits.

### État de la technique

Les vibreurs électroportatifs sont des outils communément utilisés pour la récolte de fruits, en particulier des fruits de petites tailles, en secouant les branches de l'arbre fruitier.

Ces vibreurs comprennent généralement au moins un organe équipé d'une pluralité de doigts, dit organe en peigne, entrainé selon un mouvement oscillatoire, ou selon un mouvement de va-et-vient.

Il existe actuellement des vibreurs à olive comprenant un unique organe en peigne ou deux organes en peigne superposés, une telle configuration est connue de WO2007/129207 A2. Ces vibreurs à olive présentent un champ d'action limité.

Il existe en outre des vibreurs à olive comprenant deux organes en peigne positionnés côte à côte. Ces vibreurs à olive présentent à un champ d'action plus grand que les vibreurs à olive équipé d'un seul organe en peigne de deux organes en peigne superposés. Cependant, l'utilisation de deux organes en peigne disposés côte à côte dans ces vibreurs augmentent la complexité de ces vibreurs.

Un but de la présente invention est de remédier à au moins un des inconvénients précités.

Un autre but de la présente invention est de proposer un vibreur qui présente un large champ d'action tout en conservant une architecture peu complexe.

### Exposé de l'invention

L'invention permet d'atteindre au moins l'un de ces buts par un vibreur électroportatif tel qu'énoncé à la revendication 1.

Ainsi, l'invention propose un vibreur électroportatif comprenant un ou plusieurs organes en peigne reliés chacun à la tête d'outil par un pivot individuel, chaque ou tous les organes en peigne étant entrainé(s) par un même excentrique coopérant avec une ouverture oblongue prévue sur chaque organe en peigne.

En positionnant le pivot aligné avec, et entre, le point d'attache de la tête d'outil à la perche et le centre de rotation de l'excentrique, il est possible d'utiliser un seul organe en peigne présentant un champ d'action plus large, plus particulièrement à encombrement longitudinal égal, que les vibreurs à olives de l'état de la technique équipé d'un seul organe en peigne, et ce en conservant la même complexité d'architecture que ces vibreurs à olive.

En positionnant le pivot de pivot hors de l'alignement du point d'attache de la tête d'outil à la perche avec le centre de rotation de l'excentrique, il est possible d'utiliser deux organes en peigne, positionnés côte à côte, de sorte à conserver un champ d'action aussi élevé que les vibreurs à olives de l'état de la technique équipé de deux organes en peigne disposés côté à côte, et ce avec une architecture plus simple comparée à celle de ces vibreurs à olive.

Ainsi, dans tous les cas, le vibreur à olive selon l'invention présente un champ d'action élevé tout en présentant une architecture peu complexe.

Dans la présente demande, par fruit de petite taille, on entend des fruits dont la taille, ou le diamètre, est inférieure ou égale à 10cm, en particulier inférieure ou égale à 5cm.

Selon une première version de réalisation non limitative, le vibreur selon l'invention peut comprendre deux organes en peigne, chacun relié à ladite tête d'outil par un pivot individuel se trouvant hors de l'alignement entre le point d'attache de la perche sur le corps d'outil et le centre de rotation de l'excentrique.

Ainsi, l'invention propose un vibreur électroportatif comprenant deux organes en peigne reliés chacun à la tête d'outil par un pivot individuel, les deux organes en peigne étant entrainés par un même excentrique coopérant avec une ouverture oblongue prévue sur chaque organe en peigne. Cette architecture est relativement simple, et en tous cas, plus simples que celles des vibreurs actuels comprenant deux organes en peigne disposés côte à côte.

De plus, en positionnant chaque pivot hors de l'alignement entre le point d'attache de la tête d'outil à la perche et le centre de rotation de l'excentrique, il est possible d'utiliser deux organes en peigne, positionnés côte à côte, de sorte à conserver un champ d'action aussi élevé que les vibreurs à olives de l'état de la technique équipé de deux organes en peigne disposés côté à côte, et ce avec une architecture plus simple comparée à celle de ces vibreurs à olive.

Avantageusement, les deux organes en peigne peuvent avoir des dimensions et un poids similaire. En particulier, les deux organes en peigne peuvent être identiques.

Suivant une caractéristique avantageuse, le pivot de chaque organe en peigne peut être agencé :
- à une même distance du centre de rotation de l'excentrique, et
- au même niveau dans une direction longitudinale dudit vibreur.

Ainsi, l'invention propose un vibreur électroportatif dont les pivots individuels de chacun des deux organes sont disposés sur la tête d'outil symétriquement de part et d'autre de l'alignement entre le point d'attache de la perche sur le tête d'outil et le centre de rotation de l'excentrique.

Cette architecture permet d'équilibrer les forces et les moments générés par le déplacement de chacun des organes en peigne. Ceci est en particulier le cas si l'unique excentrique est configuré pour entrainer chacun des deux organes en peigne simultanément et systématiquement dans des sens de rotation inverse l'un de l'autre.

Selon une variante de réalisation, dans une direction longitudinale du vibreur, du point de vue de l'utilisateur, le pivot de chaque organe en peigne peut être au même niveau que le centre de rotation de l'excentrique, ou avant ledit centre de rotation de l'excentrique.

Ainsi, l'invention propose un vibreur électroportatif avec un champ d'action plus large. En effet, lorsque le pivot de chaque organe étant situé au même niveau que le, ou avant le, centre de rotation de l'excentrique, les champs d'actions couverts par les organes en peigne se superposent moins, comparés à d'autre variantes dans lesquels le pivot de chaque organe en peigne se trouve devant le centre de rotation de l'excentrique.

De plus, en positionnant le pivot de chaque organe en peigne au même niveau que le centre de rotation de l'excentrique dans une direction longitudinale du vibreur, il est possible d'améliorer l'équilibre des forces et des moments générés par le déplacement de chacun des organes en peigne.

Selon une variante de réalisation, chaque organe en peigne peut être agencé de sorte que l'axe reliant l'ouverture oblongue et le pivot dudit organe forme un angle compris entre 80° et 100° avec l'orientation de chacun des doigts dudit organe en peigne.

Ainsi, l'invention propose un vibreur électroportatif équipé de deux organes en peigne dont les doigts sont orientés dans la direction longitudinal du vibreur, à plus ou moins 10°, lorsque les organes en peigne sont en position dite neutre, correspondant à la position à mi-chemin entre les positions extrêmes possible lors de leur oscillation. Par conséquent, le champ d'action individuel de chacun des peignes est équitablement réparti de part et d'autre de la position dite neutre.

Selon une deuxième version de réalisation non limitative, le vibreur selon l'invention peut comprendre un unique organe en peigne relié à la tête d'outil par un pivot situé :
- dans l'alignement du point d'attache de ladite perche sur ladite tête d'outil avec le centre de rotation dudit excentrique, et
- entre ledit point d'attache et ledit centre de rotation.

Ainsi, dans cette deuxième version de réalisation, l'invention propose un vibreur électroportatif comprenant un unique organe en peigne relié à la tête d'outil par un pivot, l'organe en peigne étant entrainé par un excentrique coopérant avec une ouverture oblongue prévue sur ledit unique organe en peigne. En positionnant le pivot aligné avec le point d'attache de la tête d'outil à la perche et le centre de rotation de l'excentrique, et disposé entre ce point d'attache et ce centre de rotation, il est possible d'utiliser un seul organe en peigne présentant un champ d'action plus élevé que les vibreurs à olives de l'état de la technique équipé d'un seul organe en peigne, et ce en conservant une même complexité d'architecture que ces vibreurs à olive.

Dans cette deuxième version de réalisation, et suivant une caractéristique avantageuse nullement limitative, l'unique organe en peigne est agencé de sorte que l'axe reliant l'ouverture oblongue et le pivot forme un angle compris entre -10° et 10° avec l'orientation de chacun des doigts de l'unique organe en peigne.

Ainsi, suivant cette caractéristique optionnelle, les doigts de l'unique organe en peigne sont orientés dans la direction longitudinale du vibreur, à plus ou moins 10° par rapport à cette direction longitudinale, lorsque le peigne est en une position, dite neutre, correspondant à la position à mi-chemin entre les positions extrêmes possible lors de son oscillation. Par conséquent, le champ d'action du peigne est équitablement réparti de part et d'autre de la position dite neutre.

Selon une variante de réalisation préférée, l'unique organe en peigne peut être symétrique de part et d'autre d'un axe passant par le pivot à l'ouverture oblongue.

Quelle que soit la version de réalisation, chaque pivot peut être disposé au niveau du centre de masse de l'organe en peigne qu'il relie.

Ainsi, le vibreur selon l'invention propose d'optimiser la consommation requise pour entrainer chaque organe en peigne. En effet, un positionnement du pivot au niveau du centre de masse de chaque organe en peigne permet de réduire les effort requis pour entrainer les organes en peigne en rotation. Cela est d'autant plus important que chaque organe en peigne est entrainés alternativement dans chacun des deux sens de rotation.

Selon une variante de réalisation, l'excentrique peut comprendre un unique actionneur coopérant avec l'ouverture oblongue de chaque organe en peigne.

Ainsi, le vibreur selon l'invention propose de simplifier le moyen d'entrainement de ou des organes en peigne. Par conséquent, l'architecture de la tête d'outil est simplifiée par rapport aux vibreurs actuels comprenant généralement un arbre à came ou un système de bielles pour entrainer le ou les organes en peigne.

Par exemple, l'actionneur peut former une partie de l'excentrique.

Selon un exemple de réalisation préféré, l'actionneur peut être une tige, ou manivelle, dont la position est excentrée du centre de rotation de l'excentrique.

Selon une variante de réalisation, chaque organe en peigne peut comprendre un roulement logé dans l'ouverture oblongue et prévu pour accueillir l'excentrique, et en particulier l'actionneur de l'excentrique.

Ainsi, le vibreur selon l'invention propose d'améliorer la fluidité de l'entrainement de chaque organe par l'excentrique. En effet, chaque roulement permet de réduire les vibrations pouvant être générées lors du déplacement de l'excentrique dans chaque ouverture oblongue, en particulier, lors du changement du sens de rotation de l'organe en peigne.

Selon une variante de réalisation la perche peut comprendre un mécanisme de transmission permettant à un moteur disposé à une extrémité, dite proximale, de ladite perche, opposée à l'extrémité distale comportant la tête d'outil, d'entrainer l'excentrique de la tête d'outil.

Ainsi, le vibreur selon l'invention propose de disposer le moteur au plus proche de l'utilisateur.

Par conséquent, le poids est mieux réparti dans le vibreur selon l'invention. En effet, un vibreur ayant le moteur au niveau de l'extrémité proximale de la perche permet de réduire le poids au niveau de l'extrémité distale où est disposé la tête d'outil. Une telle répartition du poids permet ainsi de réduire la fatigue de l'utilisateur, et d'augmenter l'ergonomie d'utilisation du vibreur selon l'invention.

Le positionnement du moteur à l'extrémité proximale de la perche permet en outre de simplifier l'architecture de la tête d'outil.

Selon un exemple de réalisation nullement limitatif, le moteur peut être disposé dans une poignée du vibreur, prévue à l'extrémité proximale de la perche.

Avantageusement, la poignée comprenant le moteur peut être une poignée multifonction pouvant être connectée sélectivement à différentes têtes d'outils électroportatifs, par exemple à une tête d'outil d'un coupe haie, d'une tronçonneuse, etc.

Ainsi, le vibreur selon l'invention peut comprendre une poignée interchangeable qui peut être utilisée à la fois pour le vibreur selon l'invention mais aussi pour d'autres outils électroportatifs.

Selon une caractéristique avantageuse, le vibreur selon l'invention peut comprendre un manchon isolant agencé entre la perche et la tête d'outil.

Le vibreur selon l'invention propose ainsi d'atténuer les vibrations et le bruit ressentis par l'utilisateur. En effet, le manchon isolant permet d'absorber au moins partiellement des vibrations générées au niveau de la tête d'outil lors de l'entrainement de chaque organe en peigne par l'excentrique. Par conséquent, le confort d'utilisation du vibreur est amélioré.

Ce manchon peut par exemple être en un matériau de type caoutchouc.

Selon une variante de réalisation particulièrement préférée, la tête d'outil du vibreur selon l'invention peut comprendre :
- un premier pivot aligné avec le point d'attache de ladite perche sur ladite tête d'outil et le centre de rotation dudit excentrique, agencé entre ledit point d'attache et ledit centre de rotation, et prévue pour recevoir un organe en peigne ; et
- un deuxième et un troisième pivots, disposés hors de l'alignement du point d'attache de la perche sur le corps d'outil avec le centre de rotation de l'excentrique, et prévu chacun pour recevoir un organe en peigne ;
de sorte que ladite tête d'outil peut sélectivement recevoir :
- un unique organe en peigne relié à ladite tête d'outil par ledit premier pivot ; ou
- deux organes en peigne, simultanément, reliés à ladite tête d'outil par lesdits deuxième et troisième pivots.

Ainsi, le vibreur selon l'invention comprend une tête d'outil capable de recevoir sélectivement un unique organe en peigne ou deux organes en peigne côte à côte, en fonction des besoins.

Par conséquent, le vibreur selon l'invention permet une plus grande flexibilité d'utilisation.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation très schématique et partielle d'un exemple de réalisation non limitatif d'un vibreur selon l'invention;
- les FIGURES 2a et 2b sont des représentations schématiques et partielles d'un exemple de réalisation non limitatif d'un vibreur selon l'invention ;
- les FIGURES 3a et 3b sont des représentations schématiques et partielles d'un autre exemple de réalisation non limitatif d'un vibreur selon l'invention ;
- la FIGURE 4 est une représentation d'un exemple de réalisation non limitatif d'un vibreur selon l'invention; et
- la FIGURE 5 est une représentation d'un exemple de réalisation très schématique et non limitatif d'un exemple de réalisation non limitatif d'un vibreur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

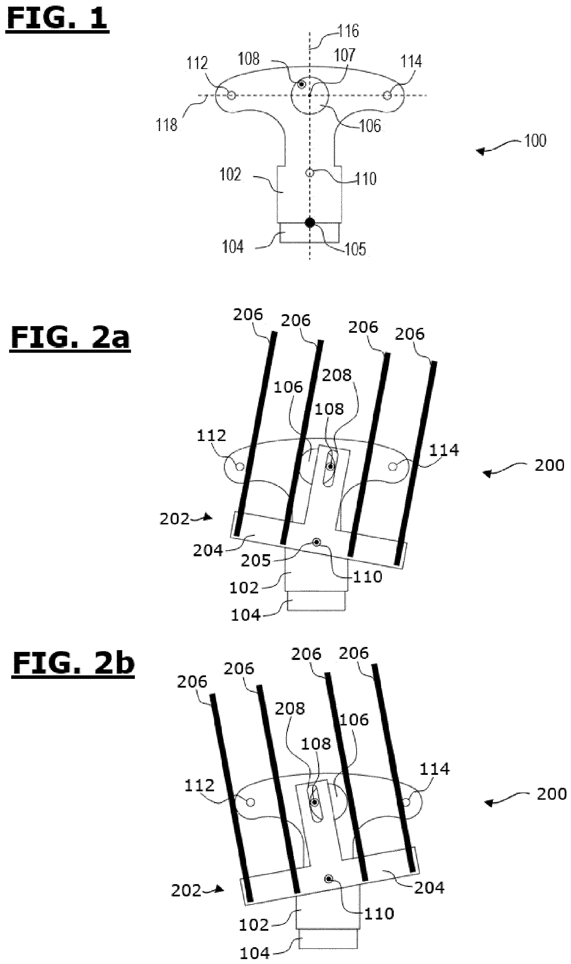

La FIGURE 1 est une représentation très schématique et partielle d'un exemple de réalisation non limitatif d'un vibreur selon l'invention.

Le vibreur 100, représenté sur la FIGURE 1, comprend une tête d'outil 102, ayant dans l'exemple illustré une forme générale en « T », comprenant une partie transversale et une partie longitudinale correspondant respectivement à la barre horizontale et à la barre vertical du « T ».

Le vibreur 100 comprend en outre une perche 104, partiellement illustrée sur la FIGURE 1. La tête d'outil 102 est reliée à la perche 104, au niveau d'une extrémité, dite distale, de la perche 104. En particulier, la tête d'outil 102 est reliée à la perche 104 au niveau d'un point d'attache 105. La tête d'outil 102 peut être reliée à la perche par tout moyen connu, par exemple par serrage par vissage, etc.

Le vibreur 100 peut en outre comprendre un manchon isolant, non illustré en FIGURE 1, et agencé entre la perche et la tête d'outil. Un tel manchon, par exemple être en un matériau de type caoutchouc, permet d'atténuer les vibrations et le bruit ressentis par l'utilisateur.

Le tête d'outil 102 comprend en outre un excentrique 106 rotatif autour d'un centre de rotation 107, et prévu pour mouvoir un ou des organes en peigne. Dans l'exemple représentée, le centre de rotation 107 de l'excentrique 106 est centré sur la tête d'outil, dans la direction perpendiculaire à la direction longitudinale de la perche. L'excentrique comprend un actionneur 108, agencé sur une partie excentrée de l'excentrique 106. Ainsi, lorsque l'excentrique est mis en rotation, l'actionneur est également en rotation, autour du centre de rotation 107, mais à distance dudit centre de rotation.

De plus, la tête d'outil 102 comprend trois points de pivots 110, 112 et 114. Chaque point de pivot 110, 112 et 114 est prévu pour accueillir un pivot reliant, chacun, un organe en peigne (non illustré en FIGURE 1) à la tête d'outil 102.

Un premier point de pivot 110 est aligné avec un axe 116 passant par le centre de rotation 107 de l'excentrique 106 et le point d'attache 105. De plus, ce premier point de pivot est positionné entre le point d'attache 105 et le centre de rotation 107 de l'excentrique 108. Dans l'exemple représenté, le premier point de pivot est agencé sensiblement à égale distance du centre de rotation 107 de l'excentrique et du point de d'attache 105 de la tête d'outil 102 à la tige 104.

Le deuxième point de pivot 112 est situé hors de l'alignement de l'axe 116, c'est-à-dire décalé par rapport à l'axe 116 dans la direction perpendiculaire audit axe 116. Autrement dit, le deuxième point de pivot 112 se trouve sur la partie transversale de la tête d'outil 102 d'un côté ou de l'autre de l'axe 116. Dans l'exemple représenté, le deuxième point de pivot 112 se trouve à gauche de l'axe 116 en regardant la FIGURE 1.

Le troisième point de pivot 114 est situé hors de l'alignement de l'axe 116, c'est-à-dire décalé par rapport à l'axe 116 dans la direction perpendiculaire audit axe 116. Autrement dit, le troisième point de pivot 114 se trouve sur la partie transversale de la tête d'outil 102 d'un côté ou de l'autre de l'axe 116. Dans l'exemple représenté, le troisième point de pivot 114 se trouve à droite de l'axe 116 en regardant la FIGURE 1.

De plus, dans l'exemple représenté, les deuxième et troisième points de pivot 112 et 114 sont agencés de sorte à être au même niveau dans la direction longitudinale dudit vibreur 100, correspondant à la direction de l'axe 116.

En outre, dans l'exemple représenté, les deuxième et troisième points de pivot 112 et 114 sont au même niveau que le centre de rotation 107 de l'excentrique 106, dans la direction longitudinale du vibreur 100. Autrement dit, dans l'exemple représenté, les deuxième et troisième points de pivot 112 et 114 sont alignés avec le centre de rotation 107 de l'excentrique 106, dans une direction 108 perpendiculaire à l'axe 116.

En particulier, cette direction 118 correspond à la direction transversale de la tête d'outil 102.

Les FIGURES 2a et 2b sont des représentations schématiques et partielles d'un exemple de réalisation non limitatif d'un vibreur selon l'invention.

Le vibreur 200 des FIGURES 2a et 2b comprend l'intégralité des éléments du vibreur 100 de la FIGURE 1.

Le vibreur 200 comprend en outre un unique organe en peigne 202. L'organe en peigne 202 comprend un corps 204, ayant une forme en « T » inversé dans l'orientation de la figure, comprenant une partie transversale et une partie longitudinale correspondant respectivement à la barre horizontale et à la barre vertical du « T ».

Le corps en « T » 204 de l'organe en peigne 202 comprend un point de pivot centré sur la partie transversale au niveau duquel l'organe en peigne 202 est relié au premier point de pivot 110 de la tête d'outil 102 par un pivot 205.

L'organe en peigne 202 comprend en outre quatre doigts 206, fixés à la partie horizontale du corps 204 en « T » de l'organe en peigne 202 et s'étendant perpendiculairement à la partie horizontale vers une extrémité distale du vibreur 200. Pour des raisons de facilité de représentation, les doigts 206 ont été raccourcis pour dans les FIGURES 2a et 2b. En pratique ces doigts sont généralement plus longs.

L'organe en peigne 202 comprend en outre, une ouverture oblongue 208, agencé dans la partie longitudinale du corps 204 et prévue pour recevoir l'actionneur 108 de l'excentrique 107. Ainsi, la rotation de l'excentrique 106 engendre un mouvement d'oscillation de l'organe en peigne 202.

Les FIGURE 2a et 2b illustrent chacune des deux positions extrêmes entre lesquels l'organe en peigne 202 oscille lors qu'il est entrainé par l'actionneur 108 de l'excentrique 106.

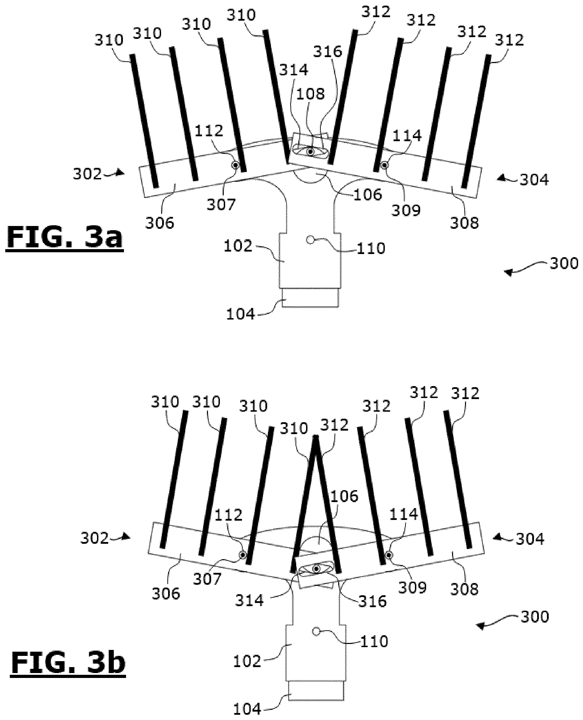

Les FIGURES 3a et 3b sont des représentations schématiques et partielles d'un autre exemple de réalisation non limitatif d'un vibreur selon l'invention.

Le vibreur 300 des FIGURE 3a et 3b comprend l'intégralité des éléments du vibreur 100 de la FIGURE 1.

Le vibreur 300 comprend deux organes en peigne 302 et 304.

Dans l'exemple de réalisation illustré en FIGURES 3a et 3b, chaque organe en peigne 302 et 304 comprend un corps, respectivement 306 et 308, ayant une forme sensiblement longitudinale, positionnée de manière transversale par rapport à la direction longitudinale du vibreur 300.

Le corps 306 et 308 de chaque organe en peigne, respectivement 302 et 304, est relié par un pivot, respectivement 307 et 309, à la tête d'outil 102.

Chaque organe en peigne 302 et 304 comprend en outre quatre doigts, respectivement 310 et 312, fixés aux corps 306 et 308, et s'étendant perpendiculairement depuis ledit corps vers une extrémité distale du vibreur 300. Pour des raisons de facilité de représentation, les doigts 310 et 312 ont été raccourcis dans les FIGURES 3a et 3b, en pratique ces doigts sont généralement plus longs.

Chaque organe en peigne 302 et 304 comprend en outre une ouverture oblongue, respectivement 314 et 316, prévue dans le corps, respectivement 306 et 308, dudit organe en peigne. Chaque ouverture oblongue 314 et 316 est prévue pour recevoir l'actionneur 108 de l'excentrique 107 de sorte que la rotation de l'excentrique 106 crée un mouvement d'oscillation de l'organe en peigne, respectivement 302 et 304.

Il est important de noter que pour le bon fonctionnement du vibreur 300 les organes en peigne 302 et 304 sont agencés de sorte que les ouvertures oblongues 314 et 316 des organes en peigne 302 et 304 puissent chacune coopérer avec l'actionneur 108 : ainsi les corps 306 et 308 des organes en peignes 302 et 304 se superposent au moins au niveau de l'excentrique 108. Dans l'exemple illustré l'organe en peigne 304 et disposé au-dessus de l'organe en peigne 302.

Les FIGURE 3a et 3b illustrent chacune deux positions extrêmes entre lesquels les organes en peigne 302 et 304 oscillent lors qu'ils sont entrainés par l'unique actionneur 108 de l'excentrique 106. Les points de pivot de chaque organe en peigne 302 et 304 étant disposés de part et d'autre de l'excentrique 106, ils sont entrainés simultanément dans des sens de rotation opposés.

La Figure 3b illustre la position où l'actionneur 108 est au plus bas, dans le sens de la figure. Cette position correspond à la position à laquelle les organes en peigne pointent le plus l'un vers l'autre. Il est ainsi possible de voir que leurs doigts respectifs se chevauchent légèrement. Afin de maximiser la champ d'action du vibreur 300, une variante de réalisation peut comprendre des points de pivots disposée avant le centre de rotation de l'excentrique dans la direction longitudinale du sécateur.

On notera que la tête d'outil 102 des vibreurs 100, 200 et 300 illustrés en relation avec les FIGURES 1 à 3 peut sélectivement recevoir :
- un unique organe en peigne 202, relié au niveau du premier point de pivot 110 tel qu'illustré en FIGURE 2a et 2b, ou
- deux organes en peigne 302 et 304, respectivement reliés au deuxième et troisième point de pivot 112 et 114 tel qu'illustré en FIGURE 3a et 3b.

Suivant des alternatives non représentées, la tête d'outil peut ne comprendre uniquement le point de pivot 110, ou uniquement les points de pivot 112 et 114.

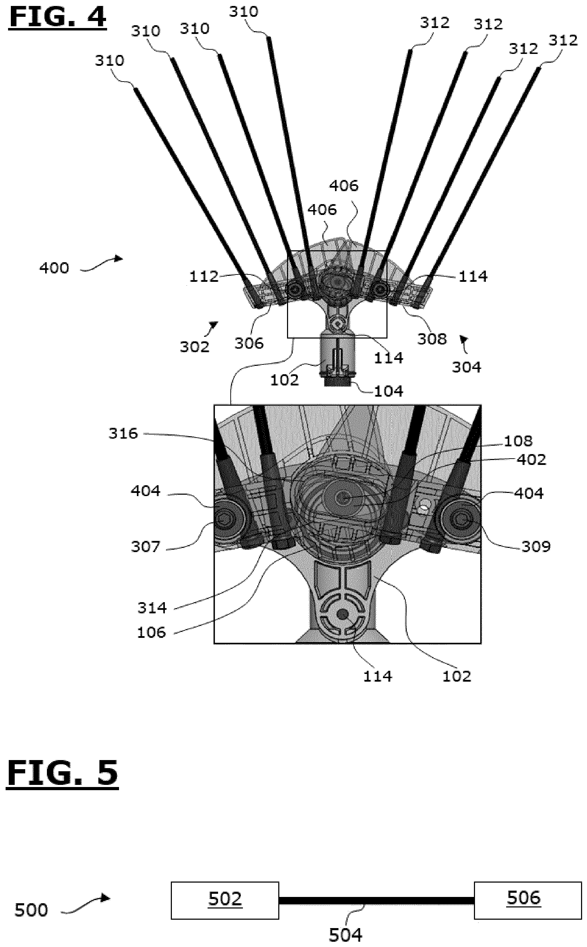

La FIGURE 4 est une représentation d'un exemple de réalisation non limitatif d'un vibreur selon l'invention.

La FIGURE 4 illustre de manière plus détaillé un exemple de réalisation d'un vibreur 400 comprenant l'intégralité des éléments du vibreur 300 décrit en relation avec les FIGURES 3a et 3b, sauf en ce qui concerne les différences décrites ci-dessous.

Dans le vibreur 400 de la FIGURE 4, chaque organe en peigne 302 et 304 comprend un roulement 402 logé dans l'ouverture oblongue dudit organe en peigne et disposé sur ledit unique actionneur 108. Chaque organe en peigne 302 et 304 comprend en outre un autre roulement 404 agencé pour faire le lien entre respectivement les pivots 307 et 309 et les corps de peigne 306 et 308. Ces roulements 402 et 404 permettent de fluidifier l'entrainement en rotation des organes en peigne 302 et 304 par l'unique actionneur 108.

Le vibreur comprend en outre deux éléments de garde 406, chacun solidaire du corps 306 ou 308 des organes en peigne 302 et 308, et prévus pour dévier des branches pouvant empêcher le bon fonctionnement du sécateur

La FIGURE 5 est une représentation d'un exemple de réalisation très schématique et non limitatif d'un exemple de réalisation non limitatif d'un vibreur selon l'invention.

Le vibreur 500 de la FIGURE 5 comprend une poignée 502 intégrant un moteur ainsi qu'un moyen d'activation de celui-ci, telle une gâchette.

Cette poignée 502 est connectée une extrémité, dite proximale, d'une perche 504. La perche 504 est connectée à son autre extrémité dite distale à une tête d'outil 506. La perche 504 comprend un mécanisme de transmission (non représenté) permettant au moteur de la poignée 502 d'entrainer en rotation l'excentrique de la tête d'outil 506, reliée à la perche 504 au niveau de l'extrémité distale de ladite perche.

Bien entendu, l'invention n'est pas limitée aux exemples détaillés ci-dessus.

## Revendications

1. Vibreur électroportatif (100;200;300;400;500) pour la récolte de fruits, et en particulier de fruits de petite taille, comprenant :
- une perche (104 ;504),
- une tête d'outil (102;506) muni d'un excentrique (106) rotatif autour d'un centre de rotation (107), et reliée à une extrémité, dite distale, de ladite perche (104 ;504) en un point d'attache (105), et
- au moins un organe en peigne (202;302,304) comprenant :
• un corps (204;306,308) à partir duquel s'étend une pluralité de doigts (206;310,312), et
• une ouverture oblongue (208;314,316) prévue pour coopérer avec ledit excentrique (108) et créer un mouvement d'oscillation dudit au moins un organe en peigne (202;302,304) ;
**caractérisé en ce que** ledit point d'attache (105) est aligné avec ledit centre de rotation dans une direction longitudinale dudit vibreur électroportatif (100;200;300;400;500) et **en ce que** chaque organe en peigne (202;302,304) est relié à ladite tête d'outil (102;506) par un pivot individuel (205;307,309) qui est :
- aligné avec ledit point d'attache (105) de ladite perche sur ladite tête d'outil (102;506) et ledit centre de rotation (107) dudit excentrique (106) dans ladite direction longitudinale, et agencé entre ledit point d'attache (105) et ledit centre de rotation (107), ou
- hors de l'alignement dudit point d'attache (105) de la perche sur ladite tête d'outil (102;506) avec ledit centre de rotation (107) dudit l'excentrique (106) dans ladite direction longitudinale.

2. Vibreur (300;400) selon la revendication précédente, **caractérisé en ce qu'**il comprend deux organes en peigne (302,304), chacun relié à ladite tête d'outil (102) par un pivot (307,309) individuel se trouvant hors de l'alignement dudit point d'attache (105) de la perche sur la tête d'outil (102) avec le centre de rotation (107) de l'excentrique (106) dans ladite direction longitudinale.

3. Vibreur (300;400) selon la revendication précédente, **caractérisé en ce que** le pivot (307,309) de chaque organe en peigne (302,304) est agencé :
- à une même distance du centre de rotation (107) de l'excentrique (106), et
- au même niveau dans ladite direction longitudinale.

4. Vibreur (300;400) selon l'une quelconque des revendications 2 ou 3, **caractérisé en ce que**, dans ladite direction longitudinale, du point de vue de l'utilisateur, le pivot (307,309) de chaque organe en peigne (302,304) est au même niveau que le centre de rotation (107) de l'excentrique (106), ou avant ledit centre de rotation (107) de l'excentrique (106).

5. Vibreur (300;400) selon l'une quelconque des revendications 2 à 4, **caractérisé en ce que** chaque organe en peigne (302,304) est agencé de sorte que l'axe reliant l'ouverture oblongue (314,316) et le pivot (307,309) dudit organe (302,304) forme un angle compris entre 80° et 100° avec l'orientation de chacun des doigts (310,312) dudit organe en peigne (302,304).

6. Vibreur (200) selon la revendication 1, **caractérisé en ce qu'**il comprend un unique organe en peigne (202) relié à la tête d'outil par un pivot (205) situé :
- dans l'alignement du point d'attache (105) de la perche (104) sur ladite tête d'outil (102) avec le centre de rotation (107) dudit excentrique (106) dans ladite direction longitudinale, et
- entre ledit point d'attache (105) et ledit centre de rotation (107) ;
et **en ce que** l'unique organe en peigne (202) est agencé de sorte que l'axe reliant l'ouverture oblongue (208) et le pivot (205) forme un angle compris entre -10° et 10° avec l'orientation des doigts (206) dudit unique organe en peigne (202).

7. Vibreur (200;300;400) selon l'une quelconque des revendication précédentes, **caractérisé en ce que** chaque pivot (205;307,309) est disposé au niveau du centre de masse de l'organe en peigne (202;302,304) qu'il relie.

8. Vibreur (200;300;400) selon l'une quelconque des revendications précédentes, **caractérisé en ce que** l'excentrique (106) comprend un unique actionneur (108) coopérant avec l'ouverture oblongue (208;314;316) de chaque organe en peigne (202;302,304).

9. Vibreur (400) selon l'une quelconque des revendications précédentes, **caractérisé en ce que** chaque organe en peigne (302,304) comprend un roulement (402) logé dans l'ouverture oblongue (314,316) et prévu pour accueillir l'excentrique (108).

10. Vibreur (500) selon l'une quelconque des revendications précédentes, **caractérisé en ce que** la perche (504) comprend un mécanisme de transmission permettant à un moteur disposé à une extrémité, dite proximale, de ladite perche (504), opposée à l'extrémité distale comportant la tête d'outil (506), d'entraîner l'excentrique de la tête d'outil (506).

11. Vibreur selon l'une quelconque des revendications précédentes, **caractérisé en ce qu'**il comprend un manchon isolant agencé entre la perche et la tête d'outil.

12. Vibreur (100;200;300;400) selon la revendication 1, **caractérisé en ce que** la tête d'outil (102) comprend :
- un premier pivot (205) aligné avec le point d'attache (105) de ladite perche (104) sur ladite tête d'outil (102) et le centre de rotation (107) dudit excentrique (106) dans ladite direction longitudinale, agencé entre ledit point d'attache (105) et ledit centre de rotation (107), et prévue pour recevoir un organe en peigne (202); et
- un deuxième et un troisième pivots (307,309), disposés hors de l'alignement dudit point d'attache (105) de la perche (104) sur la tête d'outil (102) avec le centre de rotation (107) de l'excentrique (106) dans ladite direction longitudinale, et prévu chacun pour recevoir un organe en peigne (302,304) ;
de sorte que ladite tête d'outil (102) peut sélectivement recevoir :
- un unique organe en peigne (202) relié à ladite tête d'outil (102) par ledit premier pivot (205) ; ou
- deux organes en peigne (302,304), simultanément, reliés à ladite tête d'outil (102) par lesdits deuxième et troisième pivots (307,309).

## Patentansprüche

1. Tragbarer elektrischer Rüttler (100;200;300;400;500) für die Ernte von Obst und insbesondere von Obst mit kleiner Größe, umfassend:
- eine Stange (104;504),
- einen Werkzeugkopf (102;506), der mit einem Exzenter (106) versehen ist, der um einen Drehmittelpunkt (107) herum drehbar ist, und mit einem Ende, distal genannt, der Stange (104;504) an einem Befestigungspunkt (105) verbunden ist, und
- mindestens ein kammförmiges Bauteil (202;302,304), umfassend:
• einen Körper (204;306,308), von dem aus sich eine Vielzahl von Fingern (206;310,312) erstreckt, und
• eine längliche Öffnung (208;314,316), die zum Zusammenwirken mit dem Exzenter (108) und Erzeugen einer Schwingungsbewegung des mindestens einen kammförmigen Bauteils (202;302,304) vorgesehen ist;
**dadurch gekennzeichnet, dass** der Befestigungspunkt (105) mit dem Drehmittelpunkt in einer Längsrichtung des tragbaren elektrischen Rüttlers (100;200;300;400;500) ausgerichtet ist, und dass jedes kammförmige Bauteil (202;302,304) mit dem Werkzeugkopf (102;506) durch einen einzelnen Schwenkzapfen (205;307,309) verbunden ist, der Folgendes ist:
- mit dem Befestigungspunkt (105) der Stange auf dem Werkzeugkopf (102;506) und dem Drehmittelpunkt (107) des Exzenters (106) in der Längsrichtung ausgerichtet und zwischen dem Befestigungspunkt (105) und dem Drehmittelpunkt (107) angeordnet,
oder
- außerhalb der Ausrichtung des Befestigungspunkts (105) der Stange auf dem Werkzeugkopf (102;506) mit dem Drehmittelpunkt (107) des Exzenters (106) in der Längsrichtung.

2. Rüttler (300;400) nach dem vorstehenden Anspruch, **dadurch gekennzeichnet, dass** er zwei kammförmige Bauteile (302,304) umfasst, die jeweils mit dem Werkzeugkopf (102) durch einen einzelnen Schwenkzapfen (307,309) verbunden sind, der sich außerhalb der Ausrichtung des Befestigungspunkts (105) der Stange auf dem Werkzeugkopf (102) mit dem Drehmittelpunkt (107) des Exzenters (106) in der Längsrichtung befindet.

3. Rüttler (300;400) nach dem vorstehenden Anspruch, **dadurch gekennzeichnet, dass** der Schwenkzapfen (307,309) jedes kammförmigen Bauteils (302,304) angeordnet ist:
- in einem gleichen Abstand von dem Drehmittelpunkt (107) des Exzenters (106), und
- auf der gleichen Höhe in der Längsrichtung.

4. Rüttler (300;400) nach einem der Ansprüche 2 oder 3, **dadurch gekennzeichnet, dass** in der Längsrichtung aus der Perspektive des Benutzers der Schwenkzapfen (307,309) jedes kammförmigen Bauteils (302,304) auf der gleichen Höhe wie der Drehmittelpunkt (107) des Exzenters (106) oder vor dem Drehmittelpunkt (107) des Exzenters (106) ist.

5. Rüttler (300;400) nach einem der Ansprüche 2 bis 4, **dadurch gekennzeichnet, dass** jedes kammförmige Bauteil (302,304) so angeordnet ist, dass die Achse, die die längliche Öffnung (314,316) und den Schwenkzapfen (307,309) des Bauteils (302,304) verbindet, einen Winkel zwischen 80° und 100° mit der Orientierung jedes der Finger (310,312) des kammförmigen Bauteils (302,304) ausbildet.

6. Rüttler (200) nach Anspruch 1,
**dadurch gekennzeichnet, dass** er ein einziges kammförmiges Bauteil (202) umfasst, das mit dem Werkzeugkopf durch einen Schwenkzapfen (205) verbunden ist, der gelegen ist:
- in der Ausrichtung des Befestigungspunkts (105) der Stange (104) auf dem Werkzeugkopf (102) mit dem Drehmittelpunkt (107) des Exzenters (106) in der Längsrichtung, und
- zwischen dem Befestigungspunkt (105) und dem Drehmittelpunkt (107); und dadurch, dass das einzelne kammförmige Bauteil (202) so angeordnet ist, dass die Achse, die die längliche Öffnung (208) und den Schwenkzapfen (205) verbindet, einen Winkel zwischen -10° und 10° mit der Orientierung der Finger (206) des einmaligen kammförmigen Bauteils (202) ausbildet.

7. Rüttler (200;300;400) nach einem der vorstehenden Ansprüche; **dadurch gekennzeichnet, dass** jeder Schwenkzapfen (205;307,309) auf der Höhe des Massenmittelpunkts des kammförmigen Bauteils (202;302,304), das er verbindet, angordnet ist.

8. Rüttler (200;300;400) nach einem der vorstehenden Ansprüche, **dadurch gekennzeichnet, dass** der Exzenter (106) ein einmaliges Betätigungselement (108) umfasst, das mit der länglichen Öffnung (208;314;316) jedes kammförmigen Bauteils (202;302,304) zusammenwirkt.

9. Rüttler (400) nach einem der vorstehenden Ansprüche, **dadurch gekennzeichnet, dass** jedes kammförmige Bauteil (302,304) ein Wälzlager (402) umfasst, das in der länglichen Öffnung (314,316) untergebracht und zum Aufnehmen des Exzenters (108) vorgesehen ist.

10. Rüttler (500) nach einem der vorstehenden Ansprüche, **dadurch gekennzeichnet, dass** die Stange (504) einen Übertragungsmechanismus umfasst, der es einem Motor, der an einem Ende, proximal genannt, der Stange (504) gegenüber dem distalen Ende eingerichtet ist, das den Werkzeugkopf (506) aufweist, ermöglicht, den Exzenter des Werkzeugkopfs (506) anzutreiben.

11. Rüttler nach einem der vorstehenden Ansprüche,
**dadurch gekennzeichnet, dass** er eine Isolierhülse umfasst, die zwischen der Stange und dem Werkzeugkopf angeordnet ist.

12. Rüttler (100;200;300;400) nach Anspruch 1,
**dadurch gekennzeichnet, dass** der Werkzeugkopf (102) umfasst:
- einen ersten Schwenkzapfen (205), der an dem Befestigungspunkt (105) der Stange (104) auf dem Werkzeugkopf (102) und dem Drehmittelpunkt (107) des Exzenters (106) in der Längsrichtung ausgerichtet ist, zwischen dem Befestigungspunkt (105) und dem Drehmittelpunkt (107) angeordnet ist und zur Aufnahme eines kammförmigen Bauteils (202) vorgesehen ist; und
- einen zweiten und einen dritten Schwenkzapfen (307,309), die außerhalb der Ausrichtung des Befestigungspunkts (105) der Stange (104) auf dem Werkzeugkopf (102) an dem Drehmittelpunkt (107) des Exzenters (106) in der Längsrichtung eingerichtet sind und jeweils zur Aufnahme eines kammförmigen Bauteils (302,304) vorgesehen sind;
sodass der Werkzeugkopf (102) wahlweise aufnehmen kann:
- ein einmaliges kammförmiges Bauteil (202), das mit dem Werkzeugkopf (102) durch den ersten Schwenkzapfen (205) verbunden ist; oder
- zwei kammförmige Bauteile (302,304), die durch den zweiten und den dritten Schwenkzapfen (307,309) gleichzeitig mit dem Werkzeugkopf (102) verbunden sind.

## Claims

1. A portable electric vibrating machine (100;200;300;400;500) for harvesting fruit, and in particular small fruit, comprising:
- a pole (104;504),
- a tool head (102;506) provided with an eccentric (106) which rotates about a center of rotation (107), and is connected at one end, referred to as a distal end, of said pole (104; 504) at a fixation point (105), and
- at least one comb-like member (202;302,304) comprising:
• a body (204;306,308) from which a plurality of fingers (206;310,312) extends, and
• an elongate opening (208; 314, 316) provided for interacting with said eccentric (108) and creating an oscillating movement of said at least one comb-like member (202; 302,304);
**characterized in that** said fixation point (105) is aligned with said center of rotation in a longitudinal direction of said portable electric vibrating machine (100;200;300;400;500) and **in that** each comb-like member (202;302,304) is connected to said tool head (102;506) via an individual pivot point (205;307,309) which is:
- aligned with said fixation point (105) of said pole on said tool head (102;506) and said center of rotation (107) of said eccentric (106) in said longitudinal direction, and arranged between said fixation point (105) and said center of rotation (107), or
- outside of the alignment of said fixation point (105) of the pole on said tool head (102;506) with said center of rotation (107) of said eccentric (106) in said longitudinal direction.

2. The vibrating machine (300;400) according to the preceding claim, **characterized in that** it comprises two comb-like members (302,304), each connected to said tool head (102) via an individual pivot point (307,309) which is outside of the alignment of said fixation point (105) of the pole on the tool head (102) with the center of rotation (107) of the eccentric (106) in said longitudinal direction.

3. The vibrating machine (300;400) according to the preceding claim, **characterized in that** the pivot point (307,309) of each comb-like member (302, 304) is arranged:
- at the same distance from the center of rotation (107) of the eccentric (106), and
- at the same level in said longitudinal direction.

4. The vibrating machine (300; 400) according to either of claims 2 or 3, **characterized in that,** in said longitudinal direction, from the point of view of the user, the pivot point (307, 309) of each comb-like member (302,304) is at the same level as the center of rotation (107) of the eccentric (106), or before said center of rotation (107) of the eccentric (106).

5. The vibrating machine (300;400) according to any of claims 2 to 4, **characterized in that** each comb-like member (302,304) is arranged so that the axis connecting the elongate opening (314,316) and the pivot point (307,309) of said member (302,304) forms an angle comprised between 80° and 100° with the orientation of each of the fingers (310, 312) of said comb-like member (302, 304).

6. The vibrating machine (200) according to claim 1, **characterized in that** it comprises a single comb-like member (202) connected to the tool head via a pivot point (205) which is:
- in the alignment of the fixation point (105) of the pole (104) on said tool head (102) with the center of rotation (107) of said eccentric (106) in said longitudinal direction, and
- between said fixation point (105) and said center of rotation (107);
and **in that** the single comb-like member (202) is arranged so that the axis connecting the elongate opening (208) and the pivot point (205) forms an angle of between -10° and 10° with the orientation of the fingers (206) of said single comb-like member (202).

7. The vibrating machine (200; 300; 400) according to any of the preceding claims, **characterized in that** each pivot point (205; 307, 309) is arranged at the center of mass of the comb-like member (202; 302, 304) that it connects.

8. The vibrating machine (200; 300; 400) according to any of the preceding claims, **characterized in that** the eccentric (106) comprises a single actuator (108) interacting with the elongate opening (208; 314; 316) of each comb-like member (202; 302, 304).

9. The vibrating machine (400) according to any of the preceding claims, **characterized in that** each comb-like member (302, 304) comprises a bearing (402) housed in the elongate opening (314, 316) and provided for accommodating the eccentric (108).

10. The vibrating machine (500) according to any of the preceding claims, **characterized in that** the pole (504) comprises a transmission mechanism enabling a motor arranged at an end, referred to as a proximal end, of said pole (504), opposite the distal end comprising the tool head (506), to drive the eccentric of the tool head (506).

11. The vibrating machine according to any of the preceding claims, **characterized in that** it comprises an insulating sleeve arranged between the pole and the tool head.

12. The vibrating machine (100; 200; 300; 400) according to claim 1, **characterized in that** the tool head (102) comprises:
- a first pivot point (205) aligned with the fixation point (105) of said pole (104) on said tool head (102) and the center of rotation (107) of said eccentric (106) in said longitudinal direction, arranged between said fixation point (105) and said center of rotation (107), and provided for receiving a comb-like member (202); and
- a second and a third pivot point (307, 309) which are arranged outside of the alignment of said fixation point (105) of the pole (104) on the tool head (102) with the center of rotation (107) of the eccentric (106) in said longitudinal direction, and are each provided for receiving a comb-like member (302, 304);
so that said tool head (102) can selectively receive:
- a single comb-like member (202) connected to said tool head (102) via said first pivot point (205); or
- two comb-like members (302, 304) which are simultaneously connected to said tool head (102) via said second and third pivot points (307, 309).
